# EUROPEAN PATENT SPECIFICATION

(11) **EP 2 094 958 B1**
(45) Date of publication and mention of the grant of the patent: **08.06.2011**
(21) Application number: 07834821.6
(22) Date of filing: 09.08.2007
(51) Int. Cl.: F02B 75/06, F02B 75/40, F04B 35/01, F02B 75/32, F04B 17/04, F04B 35/04, F01B 11/02, F16F 15/26

(54) **A RECIPROCATING PISTON MACHINE WITH OSCILLATING BALANCING ROTORS**
HUBKOLBENMASCHINE MIT AUSGEGLICHEN SCHWINGENDEN ROTOREN
MACHINE À PISTON AVEC UN ROTOR À BALANCIÉ OSCILLANT

(30) Priority: 09.08.2006 NZ 54905006; 22.08.2006 US 839281 P
(43) Date of publication of application: 02.09.2009
(73) Proprietor: Whisper Tech Limited, Christchurch, 8011 (NZ)
(72) Inventor: CLUCAS, Donald, Murray, Christchurch, 8011 (NZ)
(74) Representative: Higgs, Jonathan
(86) International application number: PCT/NZ2007/000212
(87) International publication number: WO 2008/018806

(56) References cited:
- EP-A2- 0 999 356
- WO-A1-96/16282
- GB-A- 1 471 447
- GB-A- 2 311 820
- US-A- 3 422 688
- US-A- 4 300 405
- US-A- 4 485 769
- US-A- 5 282 397

## Description

### FIELD OF INVENTION

The invention relates to a reciprocating piston machine which may be configured to be highly balanced. In one form the machine may comprise an electrical generator or alternator.

### SUMMARY OF INVENTION

In broad terms the invention is defined by claim 1.

The machine may be a single cylinder or multi-cylinder machine as will be further described.

In one form the machine is an electrical machine. The machine may comprise a generator driven by the piston(s), of an external or internal combustion engine for example, or an electric motor driving the piston(s), of a pump or compressor for example. Thus in a further aspect the invention comprises an electrical machine including at least one piston reciprocally movable in a cylinder, balancing rotors mounted for oscillating rotational movement and connected to the piston so that the rotors to move in opposition to the reciprocal movement of the piston, where one or both of the rotors comprise a magnet or a winding, and optionally a stator or stators associated with the rotors.

Where the machine is an electrical machine and in particular a generator, in one embodiment each of the rotors may comprise a permanent magnet or an electromagnet and the machine may comprise a stator associated with the rotors ― movement of the rotors generates an ernf the stator. In another embodiment a stator or stators may comprise a permanent or electromagnet and the rotors a winding or windings - movement of the rotors generates an emf in the rotor winding(s). In a further stator-less embodiment one rotor may comprise a permanent or electromagnet and another rotor may comprise a winding or windings - relative movement between the rotors generates an emf in the winding or windings.

Where the machine is an electrical machine and in particular an electric motor driving the piston(s), which do work pumping a fluid such as a liquid or gas, or compressing a gas, for example, in one embodiment each of the rotors may comprise a permanent or an electromagnet and a voltage may be applied to a stator or stators to drive oscillating movement of the rotors and movement of the piston(s). In another embodiment a stator or stators may comprise a permanent or electromagnet and the rotors a winding or windings to which a voltage is applied to drive movement of the rotors and pistons. In a further embodiment a stator-less embodiment one rotor may carry a permanent or electromagnet and another rotor a winding to which a voltage is applied to drive movement of the rotors and piston.

Benefits and advantages of the invention or at least of embodiments hereof are described subsequently in relation to specific embodiments that are next described in detail.

In this specification and claims the term "generator" includes electrical machines which generate either dc or ac power.

The term 'comprising' as used in this specification and claims means 'consisting at least in part of', that is to say when interrupting independent claims including that term, the features prefaced by that term in each claim will need to be present but other features can also be present.

### BRIEF DESCRIPTION OF THE DRAWINGS

The invention is further described with reference to the accompanying drawings, by way of example and without intending to be limiting, in which:
Figure 1 schematically shows a first embodiment of a machine of the invention,
Figures 2 and 3 schematically show a second embodiment of a machine of the invention,
Figure 4 schematically shows an embodiment similar to that of Figures 2 and 3 which is in particular an electrical machine comprising a stator,
Figure 5 schematically shows a further embodiment which is an electrical machine comprising a stator, from one side and partially cut away,
Figure 6 schematically shows the embodiment of Figure 5 in the direction of arrow A in Figure 5
Figure 7 schematically shows drive circuitry for the embodiment of Figures 5 and 6,
Figure 8 schematically shows a parallel twin cylinder machine of the invention,
Figure 9 schematically shows an opposed twin cylinder machine of the invention,
Figure 10 schematically shows an opposed six cylinder machine of the invention,
Figure 11 schematically shows another embodiment of a machine of the invention, and
Figure 12 shows a further embodiment of a machine of the invention

### DETAILED DESCRIPTION OF PREFERRED EMBODIMENTS

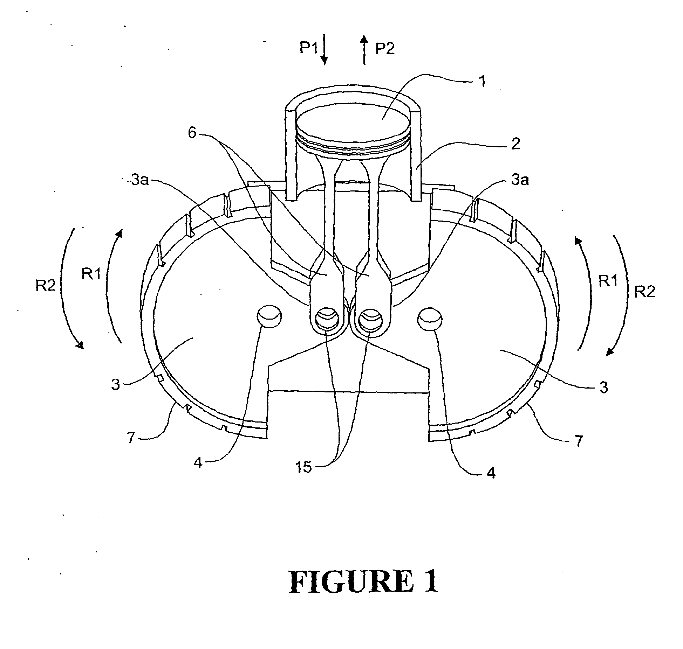

The machine of Figure 1 is shown as a single cylinder machine for simplicity and comprises a piston 1 which moves reciprocally in a cylinder 2. The piston and cylinder may be of a heat engine such as a Stirling engine, of an internal combustion engine, of a compressor such as a refrigeration or air or gas compressor, or of a fluid pump, or a steam engine, for example. For simplicity the term "machine" will be used in this specification but this term is to be understood broadly as extending to such applications and other applications.

Two balancing rotors 3 are mounted about axes transverse to the axis of motion of the piston, at bearings 4. The piston 1 and rotors 3 are coupled by connecting rods 6. The major part of the mass of each of the rotors 3 are on opposite sides of the pivot axes 4, and the connecting rods 6 couple to minor parts 3a of the rotors 3 on the other side as shown.

The configuration is such that during operation of the machine, reciprocal linear motion of the piston 1 in the cylinder 2 drives or is driven by oscillating rotational motion of the rotors 3, with the rotors moving in opposition to the movement of the piston 1. That is, during downward movement of the piston 1 in the direction of arrow P1 in Figure 1, the rotors 3 move in the direction of arrows R1. During upward movement of the piston in the direction of arrow P2 in Figure 1 the rotors move in the direction of arrows R2.

The connecting rods 6 can be either flexible in the plane of the machine but stiff axially, or have articulation joints where the connecting rods couple to the piston and/or to the rotors 3, to accommodate a small rotational motion of the connecting rods.

The machine can be substantially dynamically balanced. The rotors can be formed to have a mass distribution that will substantially balance the reciprocating mass of the piston, and to also have near equal rotary moments of inertia so that the rotating inertia of the two cranks substantially balances and negates each other. The mass of the two rotors and piston should lie in substantially the same plane to avoid out of balance moments. The sum of the rotary inertia moments of the two connecting rods will be zero due to the opposite direction of their rotation. A high degree of balance can be obtained whilst the stroke is short in comparison to the lever arm length of the two contra-rotating rotors. Also because the contra-rotating cranks are dynamically balancing the piston inertia and are fixed in unison the motion of the piston can vary away from sinusoidal motion whilst maintaining the high degree of balance. That is non-sinusoidal piston motion can be used without compromising engine balance.

In an embodiment of the machine which is an electric generator or alternator, in one form the rotors 3 may comprise magnets particularly around the curved periphery of each rotor, and a stator (not shown in Figure 1) may be associated with the rotor on either side so that movement of the rotors will generate an emf in windings of the stator(s). The rotor magnets may be permanent magnets or electromagnets, the windings of which are connected to a power source via brushes, springs or flexible wires for example. Alternatively the stators may comprise permanent or electromagnets and the rotors may carry windings in which an emf is generated as the rotors move relative to the stator(s), with the current generated in the rotor windings being connected to an external circuit again via brushes, springs or flexible wires.

Should the electrical load be lost at any time during operation, the inherently balanced nature of the mechanism means the machine would not violently shake.

In an embodiment of the machine which is an electric motor and the pistons are driven, such as in a pump or compressor for example, each of the rotors may comprise a permanent magnet or an electromagnet connected to a power source via brushes, springs or flexible wires for example, and a voltage may be applied to windings of a stator to drive the rotors. Alternatively a stator on either side may each comprise a permanent or electromagnet and the rotors winding or windings to which a voltage is applied to drive the rotors and pistons.

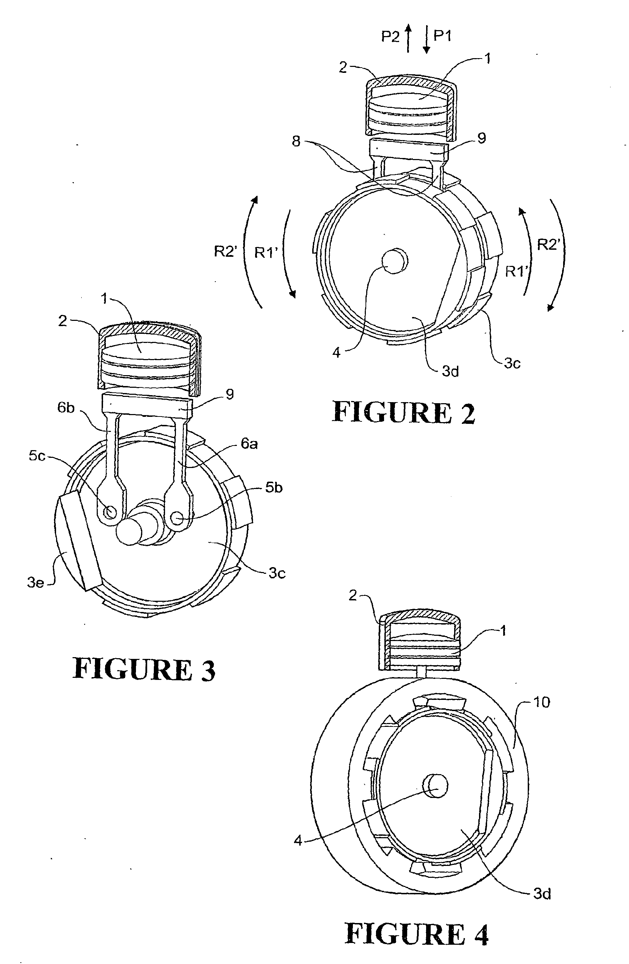

Figures 2 and 3 show an embodiment in which the contra-oscillating rotors 3 oscillate about a common axis at pivot 4. Downward movement of the piston 1 as indicated by arrow P1 causes movement of rotors 3c and 3d in the direction of arrows R2 and R1' respectively, and upward movement of the piston in the direction of arrow P2 causes movement of the rotors in the direction of arrows R1 and R2'.

As shown in Figure 3 which shows the engine with rotor 3d removed, connecting rod 6a connects to rotor 3c on one side of the axis 4, and connecting rod 6b connects to the rotor 3c on the other side of the axis 4 (in Figure 3 the end of connecting rod 6b is shown but not the rotor 3d). Each of the rotors 3c and 3d is a symmetrically and oppositely balanced about the common axis of motion 4. In this embodiment the rotors are circular-shaped about the axis 4 as shown, and weight part 3e of rotor 3c causes the centre of mass of the rotor to be to one side of the axis 4, and rotor 3d (not shown in Figure 3d) has a similar weight part on the opposite side of the axis 4.

Also in the embodiment shown in Figures 2 and 3 the connecting rods 6a and 6b connect to a bridge part 9 which in turn is connected to the piston 1, as shown. Alternatively the connecting rods 6a and 6b may connect directly to the piston 1 (without part 9).

Again in an embodiment which is an electrical generator the rotors 3 may comprise peripheral permanent magnets or electromagnets, and a surrounding stator, or alternatively (but less preferably) the stator may comprise a permanent magnet or electromagnet, the flux of which is cut by windings on the rotors. Figure 4 shows a stator 10 in an embodiment of Figures 2 and 3 configured as a generator or alternator. In a preferred form the magnet polarities of the two rotors 3c and 3d are chosen such that when the rotor magnets contra-rotate past the output stator winding, the direction of the emf generated by each moving magnet will develop in-phase series voltages in the output winding. This increases generator voltage and simplifies stator winding.

In a further embodiment the two moving rotors may each comprise a compound wound winding connected to the output connectors through brushes, springs, flexible wires or similar.

In a yet further embodiment which is a generator and which is similar to the embodiment of Figures 2 and 3, one rotor may comprise the magnet(s) and the other a winding in which the emf is generated. Alternatively again a combination of magnets and windings may be provided on each rotor. An advantage of this embodiment is that a separate surrounding stator as shown at 10 in Figure 4 is not required, and the generator is more compact than where a separate stator surrounding the rotor(s) is provided. Another advantage is that the flux cutting speed of the generator is doubled.

An embodiment of Figures 2 to 4 may be an electric motor driving the piston as before. Each of the rotors may comprise a permanent or electromagnet and a voltage may be applied to the stator to drive movement of the rotors and piston. Alternatively the stator may comprise a permanent or electromagnet and the rotors a winding or windings to which a voltage is applied to drive the rotors and piston. Alternatively again in a stator-less environment one rotor may carry a permanent or electromagnet and another rotor a winding to which a voltage is applied to drive movement of the rotors and piston, or each rotor may carry a combination of magnets and windings.

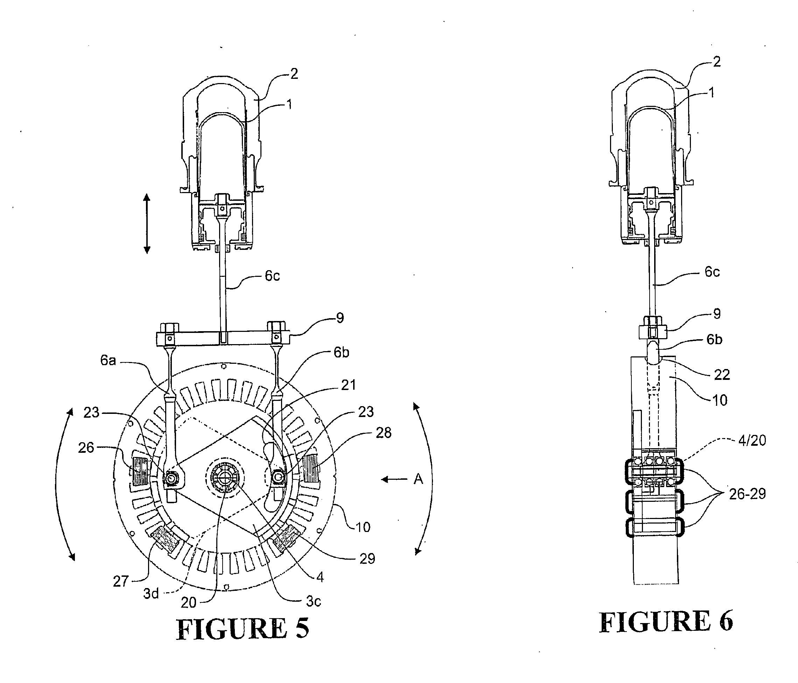

Figure 5 shows another embodiment from one side with one rotor shown in phantom outline and stator 10 bisected. Figure 6 shows the machine in direction of arrow A in Figure 5. The machine is similar to that of Figures 2 to 4, and comprises rotors 3c and 3d which oscillate about a common axle 4, to which the rotors are mounted via bearings 20. Connecting rod 6a connects to the rotor 3c on one side of the axle 4 and connecting rod 6b connects to the rotor 3d (shown in phantom outline) on the other side of the axle 4. The connecting rods 6a and 6b connect to a bridge part 9 which in turn is connected to the piston by connecting rod 6c. To make the machine as compact as possible, in this embodiment each of connecting rods 6a and 6b connects to it's respective rotor through an arcuate slot 21 in the other rotor. And each of the connecting rods 6a and 6b passes through an aperture 22 in the stator 10 (see Figure 6), or alternatively a slot may be formed across the top of the stator between the connecting rods. As in the embodiment of Figure 1, a major part of each of the rotors has a curved periphery on one side of the axis of the motion of the rotors, and each rotor has a minor part on the other side to which the connecting rods 6a and 6b couple respectively, via pivot joints 23. Each of the rotors 3c and 3d is symmetrically and oppositely balanced about the common axis of motion 4 as before. The peripheral parts of the rotors comprise permanent magnets (or alternatively electromagnets) and the machine comprises a surrounding stator 10.

An electronic control system comprising for example a micro-processor, optionally with one or more sensors on piston and/or rotor position and/or movement, may be arranged to control piston motion, such as piston velocity and/or position, for example to cause the pistons to move with a non-sinusoidal motion, or to vary the effective capacity or swept area of the cylinder(s) by the piston(s) in either an engine or in a pump or compressor embodiment, by controlling the or each piston so that the piston(s) operate(s) only at the top of the cylinder(s) for example. In a generator embodiment this may be used to control or alter the waveform of the electrical output of the generator.

In principle the thrust required for moving the piston at the desired velocity and/or to the desired top dead centre (TDC) and/or bottom dead centre(BDC) position(s) is calculated for different crank angles. The magnetic circuit and the electric circuit of the machine are designed to generate the force required.

The machine may be implemented as a stepper machine, BLDC machine, induction machine, reluctance machine, synchronous machine, limited angle torque machine, servo machine, vernier hybrid machine, or a PM synchronous machine for example, in single or (some cases) multiphase.

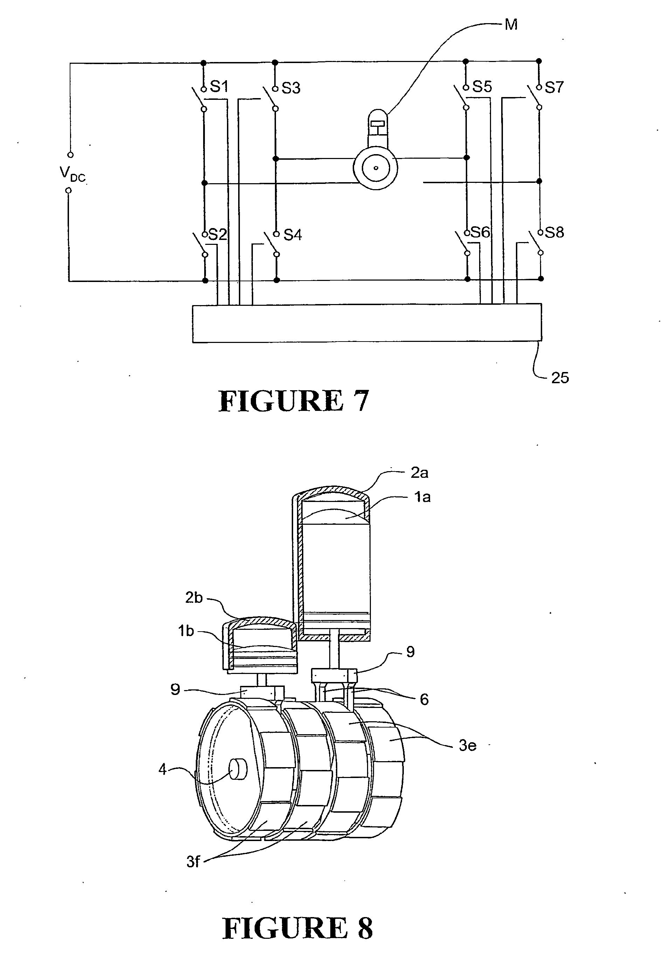

A prototype motor of the embodiment shown in Figures 5 and 6 was wired as a two phase stepper motor. The two phases were connected across two full bridges as shown in Figure 7. The bridges were fed from a DC source. A control system 25 drives the H bridges/operates the power switching to the stator windings, to control any of the duty cycle, dwell time, speed, starting thrust and a regenerative braking profile of the machine. The stator was wired similar to a two-phase stepper motor, with four stator poles 26 - 29. The design is short stator type. Each pole covered two slots in the stator former. Each rotor travelled 30° from TDC to BDC, which equated to a 25mm stroke. The resolution of this prototype machine was 5° or 4.17mm in equivalent stroke.

| | | | | | | |
|---|---|---|---|---|---|---|
| TDC | State 1 | State 2 | State 3 | State 4 | State 5 | BDC |

In normal operation mechanism has a natural rest position at state 3 above, and in one full cycle the rotors can oscillate to BDC, then to TDC, and then return to state 3. The stroke of rotor movement was is 15° on either side of state 3.

To control the stroke length, the cycle in one mode can be limited to between state 5 and state 1 on either side, instead of between BDC and TDC. This limits the stroke to 20° or 16.7mm. Alternatively in another mode the stroke length can be limited to 10° or 8.35mm stroke. For stroke control in the prototype, the minimum resolution achievable was 10°.

Another control variable is the DC level or bias. With a stroke of 10°, the natural rest position can be at any of the five states above. For example, state 1 can be the natural rest position and the machine can then in operation oscillate between TDC and state 2. Alternatively when the natural rest position is state 2, then the machine can in operation oscillate between state 1 and state 3 for a 10° stroke or between TDC and state 5 for a 20° stroke. In general, when the natural rest position is state 2 or state 4, stroke lengths of 20° and 10° are possible. When the natural rest position is state 1 or state 5, a stroke of 10° is possible.

The dwell time of the piston at TDC or BDC or both can be controlled to obtain non-linear or non-sinusoidal travel of the piston ie the piston can be controlled to pause at TDC and BDC to generate a trapezoidal motion profile.

The instantaneous position of the piston can be determined by a position sensing system such as for example an encoder to provide a piston position input signal to the machine controller 25. The position signal(s) are used for generating drive signals to the power electronic switches S1-S8 driving the individual stator coils 26-29 to achieve the desired piston motion. The prototype machine was driven in a closed loop with the position sensing system providing the feedback to decide the instant for commutation (changing between the stator poles 26-29 by operating switches S1-S8 to redirect the current into a different set of stator poles). The position sensing system also helps in controlling the modulation level to obtain the appropriate control parameters (for example-speed and dwell). The control system 25 may be arranged to drive the stator windings to achieve a flux profile to achieve accurate motion profile (similar to the micro stepping of stepper motors). The waveform can be a non-linear one with individual power control to achieve any non-linear motion profile required.

The machine may alternatively be arranged as an electrical generator driven by the piston(s), in which the power electronic circuitry is switched according to piston position and the energy generated in the windings is extracted. Energy can be extracted by non-switching methods also. Alternatively, it can be designed as any other electrical machine with suitable grid tie electronics to export the power generated.

The electrical machine may be connected to a utility grid without any power electronics by designing it as an induction machine or a synchronous machine. The generator may produce an output wave form which is non-sinusoidal by controlling the piston motion to be non-sinusoidal.

Figure 8 shows a twin-cylinder embodiment essentially comprising the machine of Figures 2 and 3 duplicated side-by-side in a parallel twin configuration as could be used as a Stirling engine. The machine comprises displacer or piston 1a which operates within cylinder 2a and is connected to a pair of rotors 3e which contra-oscillate relative to one another during operation of the engine in the same way as described in relation to Figures 2 and 3. Piston 1b operates in a cylinder 2b and is connected to contra-oscillating rotor pair 3f. Both pairs of rotors 3e and 3f oscillate about an axis as indicated at 4 (but their axes could be separate). The rotor pairs are not connected at a mechanical level but provide a common electrical output or could be configured via a microprocessor or other control system which switches or modulates the power flow to or from the windings. Alternatively the machine may again be an electric motor driving two pistons.

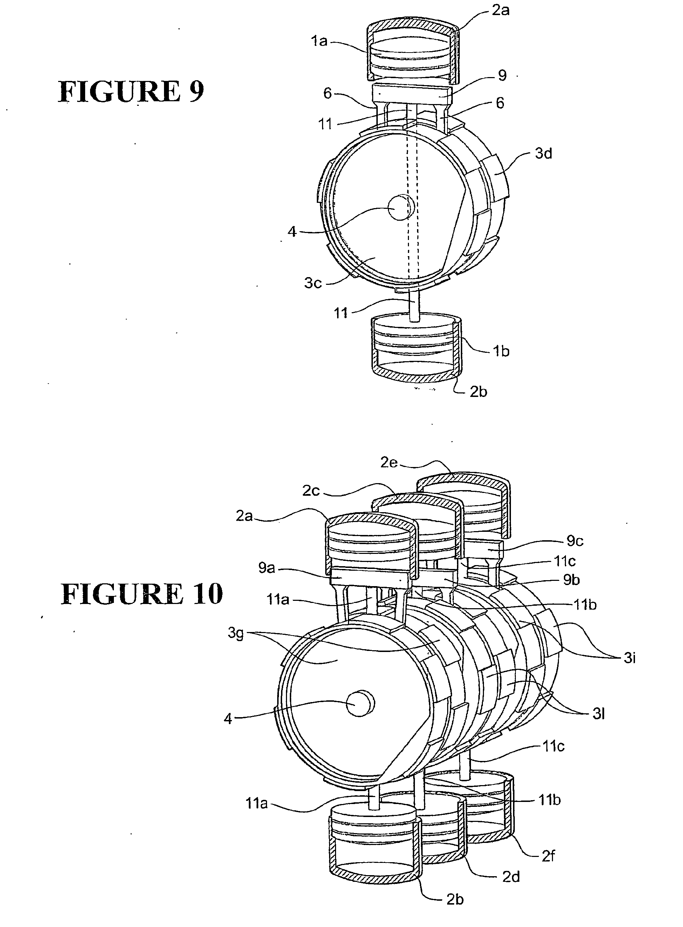

Figure 9 shows an opposed twin cylinder embodiment of the engine. Piston 1a operates in cylinder 2a and is connected to a contra-oscillating rotor pair comprising rotors 3c and 3d via connecting rods 6 through bridge part 9, as described with reference to Figures 2 and 3. Piston 1b operates in second cylinder 2b, in opposition to piston 1a. Connecting member 11 passes between the rotors 3c and 3d and couples the piston 1b to bridge part 9. Other reference numbers indicate the same parts as before.

Figure 10 shows a six cylinder embodiment comprising three adjacent opposed twin cylinder units each of which operates as described in relation to in Figure 9. Opposed pistons 1a and 1b operate in cylinders 2a and 2b and are coupled-by connecting element 11a through bridge 9a, pistons coupled by connecting element 11b similarly operate in cylinders 2c and 2d, and pistons coupled by connecting element 11c operate in cylinders 2e and 2f.

In all embodiments of electric machines which comprise a generator, very preferably for each oscillating rotor the distance between the axis about which the rotor moves, and the axis at which the connecting rod from the piston attaches to the rotor, is less than the distance from the same axis of motion of the rotor to the external peripheries of the rotors, so that the linear speed of the magnets and/or windings is greater than the linear speed of the piston(s). This makes it possible to increase the output voltage and simultaneously reduce the output current for the same output power, enabling in a lighter and more economic rotor design.

In a particularly preferred form an engine and generator of the invention may be the engine and generator of a micro-combined heat and power (microCHP) unit, in which engine and engine exhaust heat are exchanged for water or space heating. In particular the microCHP unit may be suitable for wall mounting as the engine has can be configured to have low or minimal vibration.

A further benefit of the invention is that conventional stator lamination construction may be used in preferred embodiments (which comprise stator(s)), whereas prior art linear alternator electrical machines have unconventional stator lamination construction, which increases manufacturing costs.

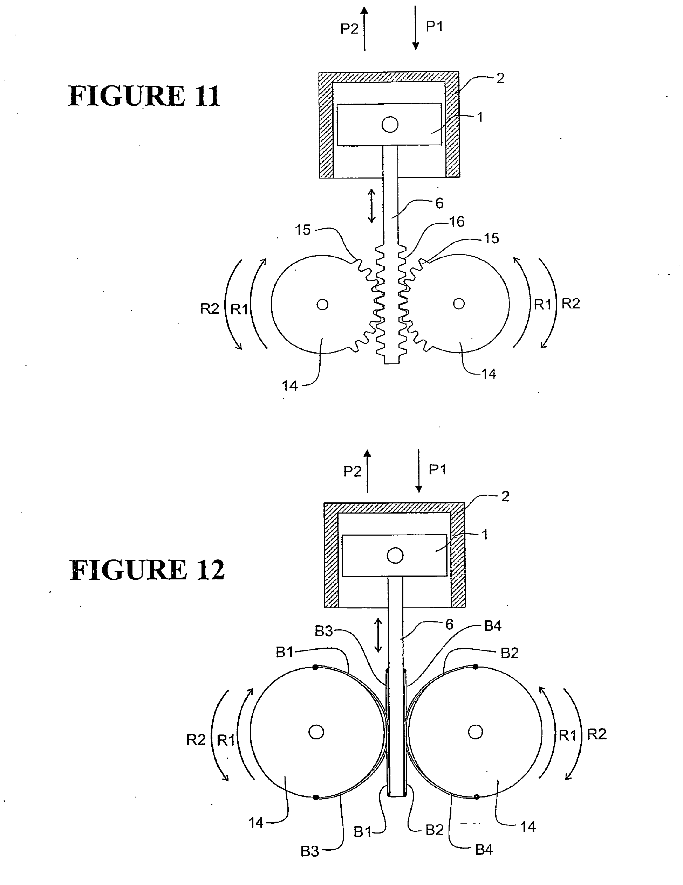

Figures 11 and 12 schematically show in single cylinder form for simplicity, embodiments of machines of the invention comprising alternative mechanisms for connecting between the piston (or pistons) and rotors. In Figure 11 rotors 14 have gears 15 formed on a part of the periphery of each rotor, which engage a rack 16 on either side of the connecting rod 6 to the piston 1, so that as the piston moves in the direction of arrow P1 the rotors will move in the direction of arrows R1 and as the piston moves in the direction P2 the rotors move in the direction R2.

In a further embodiment (not shown) but similar to that of Figure 11, coupling between the connecting rod and the rotors may be by friction or a pinch engagement, rather than a rack and gears as shown. For example the portions of the peripheries of the rotors shown as carrying gears 15 in Figure 11 may carry a thin layer of rubber or similar synthetic material or any other material which will cause an effective friction engagement with the connecting rod 6, as may the contact surface or surfaces of the connecting rod.

In the embodiment of Figure 12 the connecting rod 6 between the piston 1 and the rotors 14 are connected by four flexible connecting elements such as belts or chains or similar (herein referred to as belts for convenience). In particular belts B1 and B2 connect from the peripheries of the rotors 14 respectively, to a lower part of the connecting rod 6 and belts B3 and B4 connect from the peripheries of the rotors to an upper part of the connecting rod 6. For example where the piston drives the rotors, belts B1 and B2 are in tension during downward movement of the piston as indicated by arrow P1, causing the rotors to pivot in the direction of arrows R1, while during upward movement of the piston P2 belts B3 and B4 are in tension causing the rotors to move in the direction of arrows R2. Alternatively where the rotors drive the piston as in an electric motor application, movement of the rotors in the direction of arrows R1 causes belts B3 and B4 to be in tension, causing upward movement of the piston in the direction of arrow R2, and when the rotors reverse their direction and move in the direction of arrows R2 belts B1 and B2 are in tension causing downward movement of the piston in the direction of arrow P2.

In all embodiments described above a biasing arrangement, of for example a mechanical spring or springs, may be provided to bias the rotors to a neutral position (a position at which the piston is intermediate of its stroke length in the cylinder). A spring arrangement may operate between the two rotors or each pair of rotors, or separately between one or more rotors and a fixed (non-moving) part of the machine. The bias arrangement may be configured to create a natural working frequency of the machine. Alternative to a mechanical spring arrangement the bias arrangement may utilise gas cylinders or similar, or magnetic force. Alternatively the spring, magnet or gas spring could act on the piston or piston rod.

In an embodiment of the machine which is an electric generator the machine may be a wave energy generator. The piston may be coupled to a diaphragm or other part which is moved by wave motion.

In another particular embodiment the machine may be both an electric motor and a generator, in an application in which a gas is compressed (work is done of the gas) and subsequently it expands (work is done by the gas) in the cylinder(s). Electric power may be put into the machine to drive the piston(s) to compress the gas during movement of the piston(s) in one direction, but the machine may act as a generator during the expansion phase of the gas, where the piston(s) drive(s) the rotors.

The foregoing describes the invention including a preferred form thereof. Alterations and modifications as would be obvious to those skilled in the art are intended to be incorporated within the scope hereof as defined in the accompanying claims.

## Claims

1. A machine including at least one piston (1) reciprocally movable in a cylinder (2), at least two balancing rotors (3c, 3d) mounted for oscillating rotational movement about an axis or axes (4) transverse to the axis of motion of the piston (1), one balancing rotor (3c) having a centre of mass on one side of and another balancing rotor (3d) having a centre of mass on an opposite side of the axis (4) or axes of motion of the rotors, and at least one connecting member (6) or mechanism between the piston (1) and rotors (3) so that the rotors move in opposition to the reciprocal movement of the piston,
***characterised in that***
one or more of said rotors comprises either a magnet or a winding, and
said machine further includes a stator (10) or stators associated with the rotor or rotors.

2. A machine according to claim 1 wherein each rotor (3) has a substantially circular periphery about it's axis of motion.

3. A machine according to either of claims 1 and 2 wherein each rotor (3) comprises a major part having a curved periphery on one side of the axis of motion of the rotor and a minor part on the other side of the axis (4) of motion of the rotor.

4. A machine according to any one of claims 1 to 3 wherein the rotors are of substantially equal mass and have a combined mass distribution that substantially balances the reciprocating mass of the piston(s).

5. A machine according to any one of claims 1 to 4 wherein the mass of the rotors (3) and piston(s) (1) lies in substantially the same plane.

6. A machine according to any one of claims 1 to 5 wherein a connecting member (6a) connects to one rotor (3d) on one side of the axis (4) or axes of movement of the rotors, and a connecting member (6b) connects to the other rotor (3c) on the other side thereof.

7. A machine according to any one of claims 1 to 6 wherein one or more of the rotors comprises either a permanent magnet or an electromagnet so that movement of the rotor(s) (3) generate(s) an emf in the stator(s) (10).

8. A machine according to any one of claims 1 to 6 wherein the stator (10) or stators comprise(s) a permanent or electromagnet and the rotor or rotors comprise(s) a winding or windings so that movement of the rotor(s) generate(s) an emf in the rotor winding(s).

9. A machine according to any one of claims 1 to 6 wherein one rotor comprises a permanent or electromagnet and another rotor comprises a winding so that relative movement between the rotors generates an emf in the winding or windings.

10. A machine according to any one of claims 1 to 9 wherein the piston(s) (1) is or are of a heat engine.

11. A machine according to any one of claims 1 to 10 wherein said machine comprises an electrical generator driven by the piston(s) (1).

12. A machine according to any one of claims 10 to 11 wherein the distance between the axis (4) about which each rotor (3) moves, and the axis (23) at which said connecting member (6) or mechanism from the piston (1) attaches to the rotor (3), is less than the distance from the axis of motion of the rotor to an external peripheral part of the rotor, so that the linear speed of magnet(s) and/or winding(s) at said external peripheral part of the rotor is greater than the linear speed of the piston(s).

13. A machine according to any one of claims 1 to 12 including an electronic control system arranged to control piston motion.

14. A machine according to claim 13 comprising a stator (10) comprising multiple windings and wherein the control system is arranged to control piston motion by controlling energising power to the stator windings.

15. A micro-combined heat and power (microCHP) unit comprising a machine according to any one of claims 1 to 14.

16. A wall mountable micro-CHP unit according to claim 15.

17. A machine as claimed in any one of claims 1 to 6 wherein said machine also includes an electric motor driving the piston(s) (1).

## Patentansprüche

1. Maschine umfassend mindestens einen Kolben (1), der reziprok in einem Zylinder (2) beweglich ist, mindestens zwei balancierende Rotoren (3c, 3d), die zur oszillierenden rotierenden Bewegung um eine Achse oder Achsen (4) transvers zur Bewegungsachse des Kolbens (1) montiert sind, einen balancierenden Rotor (3c), der einen Masseschwerpunkt auf einer Seite und einen anderen balancierenden Rotor (3d), der einen Masseschwerpunkt auf einer entgegengesetzten Seite der Bewegungsachse (4) oder -achsen der Rotoren aufweist, und mindestens ein Verbindungsteil (6) oder einen Verbindungsmechanismus zwischen dem Kolben (1) und den Rotoren (3), so dass die Rotoren sich der reziproken Bewegung des Kolbens entgegengesetzt bewegen,
**dadurch gekennzeichnet, dass**
einer oder mehrere der Rotoren entweder einen Magnet oder eine Wicklung umfasst/umfassen und die Maschine des Weiteren einen Stator (10) oder Statoren umfasst, der/die mit dem Rotor oder den Rotoren assoziiert ist.

2. Maschine nach Anspruch 1, wobei jeder Rotor (3) eine im Wesentlichen kreisförmige Peripherie um seine Bewegungachse herum aufweist.

3. Maschine nach einem der Ansprüche 1 und 2, wobei jeder Rotor (3) ein Hauptteil, das eine gekrümmte Peripherie aufweist, auf einer Seite der Bewegungsachse des Rotors und ein kleineres Teil auf der anderen Seite der Bewegungsachse (4) des Rotors umfasst.

4. Maschine nach einem der Ansprüche 1 bis 3, wobei die Rotoren eine im Wesentlichen gleiche Masse und eine kombinierte Massenverteilung aufweisen, die im Wesentlichen die sich hin und her bewegende Masse des/der Kolben balanciert.

5. Maschine nach einem der Ansprüche 1 bis 4, wobei die Masse der Rotoren (3) und des/der Kolben (1) in im Wesentlichen derselben Ebene liegt.

6. Maschine nach einem der Ansprüche 1 bis 5, wobei ein Verbindungsteil (6a) an einen Rotor (3d) auf einer Seite der Bewegungsachse (4) oder -achsen des Rotors angeschlossen ist und ein Verbindungsteil (6b) an den anderen Rotor (3c) auf der anderen Seite davon angeschlossen ist.

7. Maschine nach einem der Ansprüche 1 bis 6, wobei ein oder mehrere der Rotoren entweder einen permanenten Magnet oder einen Elektromagnet umfasst/umfassen, so dass die Bewegung des Rotors/der Rotoren (3) eine EMK in dem Stator/den Statoren (10) erzeugt.

8. Maschine nach einem der Ansprüche 1 bis 6, wobei der Stator (10) oder die Statoren einen permanenten oder Elektromagnet umfasst/umfassen und der Rotor oder die Rotoren eine Wicklung oder Wicklungen umfasst/umfassen, so dass die Bewegung des/der Rotor(en) eine EMK in der/den Rotorwicklung(en) erzeugt.

9. Maschine nach einem der Ansprüche 1 bis 6, wobei ein Rotor einen permanenten oder Elektromagnet umfasst und ein anderer Rotor eine Wicklung umfasst, so dass die relative Bewegung zwischen den Rotoren eine EMK in der Wicklung oder den Wicklungen erzeugt.

10. Maschine nach einem der Ansprüche 1 bis 9, wobei der/die Kolben (1) zu einer Wärmekraftmaschine gehört/gehören.

11. Maschine nach einem der Ansprüche 1 bis 10, wobei die Maschine einen durch den/die Kolben (1) angetriebenen elektrischen Generator umfasst.

12. Maschine nach einem der Ansprüche 10 bis 11, wobei der Abstand zwischen der Achse (4), um die sich jeder Rotor (3) bewegt, und der Achse (23), an der das Verbindungsteil (6) oder der -mechanismus des Kolbens (1) an den Rotor (3) befestigt ist, geringer ist als der Abstand von der Bewegungsachse des Rotors zu einem externen peripheren Teil des Rotors, so dass die lineare Geschwindigkeit von Magnet(en) und/oder Wicklung(en) an dem externen peripheren Teil des Rotors höher ist als die lineare Geschwindigkeit des Kolbens/der Kolben.

13. Maschine nach einem der Ansprüche 1 bis 12, die ein elektronisches Regelsystem umfasst, das zum Regeln der Kolbenbewegung angeordnet ist.

14. Maschine nach Anspruch 13, umfassend einen Stator (10), der mehrere Wicklungen umfasst, und wobei das Regelsystem so angeordnet ist, dass es die Kolbenbewegung durch Regeln der Ansteuerkraft zu den Statorwicklungen regelt.

15. Mikrokombinierte Wärme- und Kraft-(Mikro-CHP-) Einheit, umfassend eine Maschine nach einem der Ansprüche 1 bis 14.

16. An der Wand montierbare Mikro-CHP-Einheit nach Anspruch 15.

17. Maschine nach einem der Ansprüche 1 bis 6, wobei die Maschine auch einen elektrischen Motor umfasst, der den/die Kolben (1) antreibt.

## Revendications

1. Machine comportant au moins un piston (1) apte à se déplacer suivant un mouvement de va-et-vient dans un cylindre (2), au moins deux rotors d'équilibrage (3c, 3d) montés en vue d'un mouvement de rotation oscillant autour d'un axe ou d'axes (4) qui sont transversaux par rapport à l'axe de mouvement du piston (1), un rotor d'équilibrage (3c) ayant un centre de masse sur un côté de l'axe (4) ou des axes de mouvement des rotors et un autre rotor d'équilibrage (3d) ayant un centre de masse sur un côté opposé de l'axe (4) ou des axes de mouvement des rotors, et au moins un mécanisme ou élément (6) de raccordement entre le piston (1) et les rotors (3) de sorte que les rotors se déplacent en opposition au mouvement de va-et-vient du piston,
**caractérisé en ce que**
un ou plusieurs desdits rotors comportent soit un aimant soit un enroulement, et
ladite machine englobe en outre un stator (10) ou des stators lequel ou lesquels est/sont associé(s) au rotor ou aux rotors.

2. Machine selon la revendication 1, chaque rotor (3) présentant une périphérie sensiblement circulaire autour de son axe de mouvement.

3. Machine selon l'une des revendications 1 et 2, chaque rotor (3) comportant une pièce primaire présentant une périphérie incurvée sur un côté de l'axe de mouvement du rotor et une pièce secondaire sur l'autre côté de l'axe (4) de mouvement du rotor.

4. Machine selon l'une quelconque des revendications 1 à 3, les rotors ayant une masse sensiblement égale et ayant une distribution de masse combinée qui équilibre sensiblement la masse de va-et-vient du piston / des pistons.

5. Machine selon l'une quelconque des revendications 1 à 4, la masse des rotors (3) et du piston / des pistons (1) se trouvant sensiblement dans le même plan.

6. Machine selon l'une quelconque des revendications 1 à 5, un élément de raccordement (6a) se raccordant à un rotor (3d) sur un côté de l'axe (4) ou des axes de mouvement des rotors, et un élément de raccordement (6b) se raccordant à l'autre rotor (3c) sur l'autre côté de celui-ci.

7. Machine selon l'une quelconque des revendications 1 à 6, un ou plusieurs des rotors comprenant soit un aimant permanent soit un électro-aimant de sorte que le mouvement du rotor / des rotors (3) génère une force électromagnétique dans le stator / les stators (10).

8. Machine selon l'une quelconque des revendications 1 à 6, le stator (10) ou les stators comprenant un aimant permanent ou un électro-aimant et le rotor ou les rotors comprenant un enroulement ou des enroulements de sorte que le mouvement du rotor / des rotors génère une force électromagnétique dans l'enroulement / les enroulements du rotor.

9. Machine selon l'une quelconque des revendications 1 à 6, un rotor comprenant un aimant permanent ou un électro-aimant et un autre rotor comprenant un enroulement de sorte que le mouvement relatif entre les rotors génère une force électromagnétique dans l'enroulement ou les enroulements.

10. Machine selon l'une quelconque des revendications 1 à 9, le piston / les pistons (1) étant celui / ceux d'un moteur thermique.

11. Machine selon l'une quelconque des revendications 1 à 10, ladite machine comprenant une génératrice électrique entraînée par le piston / les pistons (1).

12. Machine selon l'une quelconque des revendications 10 à 11, la distance entre l'axe (4) autour duquel chaque rotor (3) se déplace, et l'axe (23) au niveau duquel ledit mécanisme ou élément (6) de raccordement provenant du piston (1) se rattache au rotor (3) étant inférieure à la distance allant de l'axe de mouvement du rotor jusqu'à une partie périphérique externe du rotor, de sorte que la vitesse linéaire de l'aimant / des aimants et/ou de l'enroulement / des enroulements au niveau de ladite partie périphérique externe du rotor est plus grande que la vitesse linéaire du piston / des pistons.

13. Machine selon l'une quelconque des revendications 1 à 12, englobant un système de commande électronique lequel est agencé de façon à commander le mouvement du piston.

14. Machine selon la revendication 13, comprenant un stator (10) lequel comporte de multiples enroulements et cas dans lequel le système de commande est agencé pour commander le mouvement du piston grâce à la commande de l'énergie d'excitation se rendant vers les enroulements du stator.

15. Unité de micro-cogénération (micro CHP) comprenant une machine selon l'une quelconque des revendications 1 à 14.

16. Unité de micro-cogénération CHP à montage mural, selon la revendication 15.

17. Machine selon l'une quelconque des revendications 1 à 6, ladite machine englobant également un moteur électrique lequel entraîne le piston / les pistons (1).
